# EUROPEAN PATENT APPLICATION

(11) **EP 2 214 174 A2**
(43) Date of publication of application: **04.08.2010**
(21) Application number: 10151269.7
(22) Date of filing: 21.01.2010
(51) Int. Cl.: G11B 27/10, G06F 3/048, G06F 17/30

(54) **Apparatus and method for playing of multimedia item**

(30) Priority: 23.01.2009 KR 20090006021
(71) Applicant: Samsung Electronics Co., Ltd., Suwon-si, Gyeonggi-do (KR)
(72) Inventor: Lee, Bong Won, Gyeonggi-do (KR); Yun, Joong Sam, Gyeonggi-do (KR); Ji, Sung Wook, Gyeonggi-do (KR)
(74) Representative: Jenkins, Richard Gavin

(57) **Abstract**

An apparatus for playing a multimedia item includes a display unit which outputs an operation unit that includes a wheel area and generates an input signal according to a touch event generated in the wheel area in selecting or generating the multimedia item.A storage unit stores functional setting information defining a function according to at least one multimedia item and the input signal generated in the operation unit.A controller generates a control signal for playing the multimedia item based on the input signal generated in the operation unit and the function setting information.

## Description

### BACKGROUND OF THE INVENTION

### Field of the Invention

The present invention relates to an apparatus and method for playing a multimedia item.More particularly, the present invention relates to an apparatus and method for playing a multimedia item for controlling the playing of by a portable terminal with more rapid, intuitive and convenience known heretofore.

### Description of the Related Art

As communication technology, particularly wireless communication technology, has rapidly developed, the functionality of portable terminals has also gradually expanded, and accordingly, various user interfaces (UI) and various functions using such interfaces for portable terminals are now included in the manufacture of such terminals. When playing multimedia items in the portable terminal, e.g., when playing music contents, the portable terminal provides music source information corresponding to music contents displays an object through a display means in response to image information being processed.

In addition, the portable terminal displays that music contents is playing through objects such as a progress bar or a graphic equalizer, as well as the above-described object. However, the user interface according to the playing of music contents provided by an existing portable terminal is a control means for the playing of multimedia item which is playing, and it provides a button only for "play", "select next music", "select previous music", and "pause", such that the control of playing item is very simple. Accordingly, it is disadvantageous in that various manipulative behaviors for user's music content are essentially impossible.

### SUMMARY OF THE INVENTION

The present invention provides an apparatus and method for playing a multimedia item which can intuitively, conveniently, and more rapidly perform the control of playing a multimedia item.

In accordance with an exemplary aspect of the present invention, an apparatus for playing a multimedia item includes: a display means which outputs an operation unit that includes a wheel area and generates an input signal according to a touch event generated in the wheel area in selecting or generating the multimedia item; a storage unit which stores function setting information defining a function according to at least one multimedia item and the input signal generated in the operation unit; and a controller which generates a control signal for playing the multimedia item based on the input signal generated in the operation unit and the function setting information.

In accordance with another exemplary aspect of the present invention, a method of playing a multimedia item includes: selecting the multimedia item for playing; outputting an operation unit that includes a wheel area, and generates an input signal according to a touch event generated in the wheel area; a loading function setting information for defining a function according to at least one multimedia item and the input signal generated in the operation unit; and generating a control signal for playing the multimedia item based on the input signal generated in the operation unit and the function setting information.

According to an apparatus and method for playing a multimedia item of the present invention, playing of the multimedia item can be performed can more conveniently and intuitively.

### BRIEF DESCRIPTION OF THE DRAWINGS

The objects, features and advantages of the present invention will become more apparent from the following detailed description in conjunction with the accompanying drawings, in which:
FIG. 1 illustrates an example of a portable terminal according to an exemplary embodiment of the present invention;
FIG. 2 illustrates an example of a display means including a disk operating unit according to an exemplary embodiment of the present invention;
FIG. 3 illustrates an operation of a disk operating unit according to a first exemplary embodiment of the present invention;
FIG. 4 illustrates an operation of a disk operating unit according to a exemplary second embodiment of the present invention;
FIG. 5 is a flowchart illustrating a multimedia item playing method of a portable terminal according to an exemplary embodiment of the present invention; and
FIG. 6 is a block diagram illustrating a configuration of a portable terminal according to an exemplary embodiment of the present invention.

### DETAILED DESCRIPTION

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring appreciation of the subject matter of the present invention by a person of ordinary skill in the art.

Hereinafter, a portable terminal having an operation unit for playing a multimedia item according to exemplary embodiments of the present invention will be illustrated with reference to the attached drawings. However, the presently claimed invention is in no way limited to a portable terminal described herein below, and it should be noted that I the present invention is applicable to various applications and structures based on the exemplary embodiments.

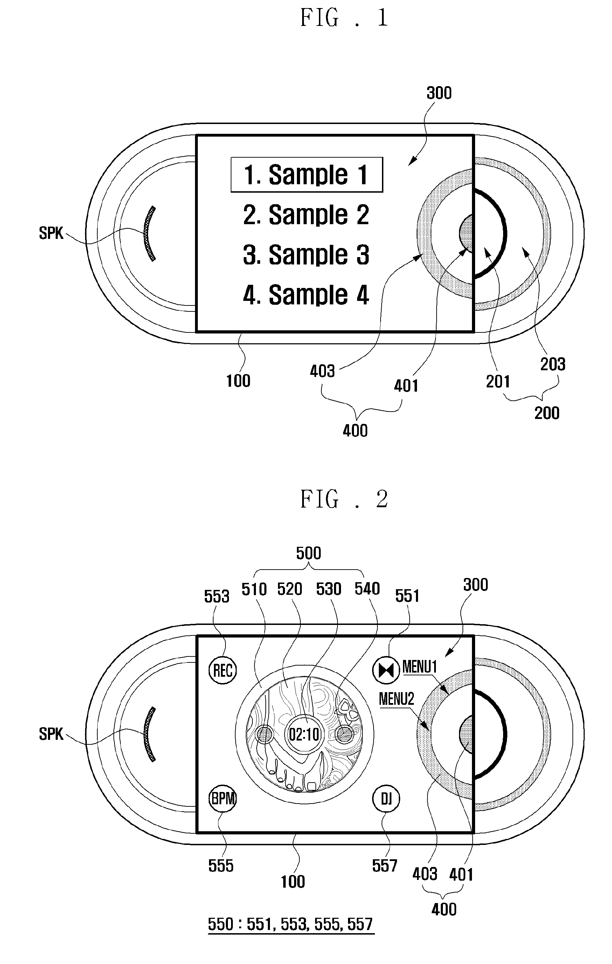

FIG. 1 illustrates an example of a portable terminal according to an exemplary embodiment of the present invention.

Referring now to FIG. 1, the portable terminal of the present invention in this exemplary embodiment preferably includes a display means 100 where an output area 300 and an execution area 400, an input means 200 and a speaker (SPK) which outputs an audio signal according to the playing of multimedia item. The portable terminal of the present invention having such a display configuration can display as an output a menu screen according to an input signal generated in the input means, as well as set a certain area of the display means 100, as shown, in case a menu which can select multimedia item is selected from among outputted menu screen, and can output a list of multimedia items to a corresponding output area display 300.

At this time, the portable terminal can also set other areas of the display means 100, such as the execution area 400. The execution area 400 preferably includes a touch wheel 403 and a confirmation key map 401 which can select a multimedia item. The portable terminal can control deactivation of a touch sensor of the output area 300 by resetting the touch sensor, and activation of a corresponding area of the execution area 400, i.e. a touch wheel 403 area and a confirmation key map 401 area, in a case where the display means 100 is altered so as to include the output area 300 which outputs a multimedia item list in the state where menu screen is outputted and the execution area 400. To this end, the display means 100 can be implemented through a touch screen.

Thus, the configuration of the display means 100 may include a display panel and a touch sensor. The display panel can provide an output screen according to the playing of various contents stored in a storage unit, and/or an image according to the activation of a function(s) of the portable terminal. The touch sensor can be arranged in the form of matrix over the whole area of the display panel or just a portion of the display panel, and can be partly activated so as to provide an effect for a corresponding image touch, in response to a user touching certain images shown on the display panel.

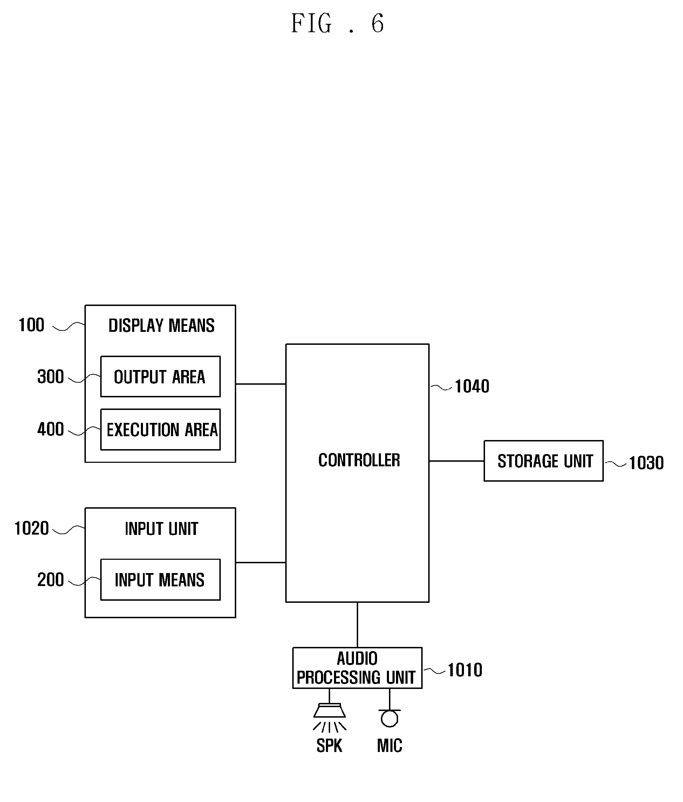

More particularly, under the control of the controller (including but not limited to the controller 1040 shown in FIG. 6) , the touch sensor can be activated in the entire display panel, or a certain designated area of the display panel can be activated while a remaining area(s) is/are deactivated. Particularly, the touch sensor of the present invention can maintain the deactivation state in the output area, while, in the execution area 400, the touch sensor can be activated in an area corresponding to a pertinent images, i.e. in the touch wheel 403 area and the confirmation key map 401 area.

As described above, the execution area 400 includes the touch wheel 403 area and the confirmation key map 401 area. The touch wheel 403 area can have a semi-circular shape as shown in drawing, but a person of ordinary skill in the art understands and appreciates that various other shapes are permissible. The touch wheel 403 area can provide directivity according to user's touch. That is, in case user touches down on a specific point of the touch wheel 403 area and performs a drag operation that moves a surface of the display means 100 while maintaining the touched state on the touch wheel, the execution area 400 can sense the direction of the drag operation, and can send this information to the controller.

The controller can control movement of a highlight which designates the multimedia item that is being outputted to the output area 300 according to the sensed of direction movement. The confirmation key map 401 area can generate an input signal which can select multimedia item indicated by the highlight among the multimedia item which is being outputted to the output area 300 according to touch. That is, as shown in drawing, in the state where highlight indicates "Sample1" of the output area 300, in case touch is generated in the confirmation key map 401 area, the confirmation key map 401 can generate an input signal according to the selection of "Sample1" and can send to the controller 1040.

The output area 300 may comprise the rest area of the display means 100 excluding the execution area 400. Such an output area can include an output menu required by user, or can output multimedia item(s) as shown in drawing under the control of the controller. In the example shown in FIG. 1, the output area 300 of the present invention indicates four multimedia items, i.e. "Sample1, Sample2, Sample3, and Sample4". However, the present invention is not limited to this number, as more items or fewer items can be outputted than shown.

When outputting a plurality of multimedia items, the output area 300 can output by adjusting index information of multimedia item which is being outputted, e.g., the size of text, in consideration of the whole space of the display means 100. In addition, the output area 300 can output a multimedia item list which includes a predefined number of multimedia items and a scroll bar which indicates that at least an additional multimedia item exists but is not currently displayed. When outputting the scroll bar, a user moves the highlight by using the touch wheel 403 of the execution area 400, so that touch operation for the manipulating an additional scroll bar. The input means 200 can be implemented through, for example, a touch pad. Such an input means typically does not change or move as it is implemented through hardware in comparison with the touch wheel 403 area and the confirmation key map 401 area of the display means 100 which are implemented through software. That is, the input means 200 can be prepared through a fixed button type, or by visual representations of buttons.

The input means 200 includes a wheel pad 203 area and a confirmation key 201 area. The wheel pad 203 area is an area which recognizes a drag operation that moves while the touchdown operation of user is maintained. That is, the wheel pad 203 area which supports a function which is similar to the function of the touch wheel 403. The confirmation key 201 area comprises an area which supports a function which is identical with the function of the confirmation key map 401 area, and can generate an input signal corresponding to the confirmation key when it is touched.

In this particular embodiment, the input means 200 and the execution area 400 are differentiated as they are implemented through hardware and software respectively. However, seemingly, for example, a certain area of the input means and execution are in close proximity to each other, so that they seem to be connected to each other, and the continuity of operation can be substantially provided. That is, the wheel pad 203 of the execution area 400 and the touch wheel 403 are connected each other to generate a wheel input signal in the form of ring band.

In addition, the confirmation key map 401 area of the execution area 400 and the confirmation key 201 area of the input means 200 can generate an input signal corresponding to the same input signal e.g., "confirmation", in response to a touch which is generated in at least one of the two areas. Accordingly, in case the mobile terminal user desires to generate the wheel input signal, the wheel input signal can be continuously generated in the boundary point of the execution area 400 and the input means 200 area.

To this end, the controller can control the recognition of a touch signal generated in the touch wheel 403 and a touch signal generated in the wheel pad 203 as an input signal for the same operation. Similarly, the controller can control recognition of an input signal generated in the confirmation key map 401 area and the confirmation key 201 area as one confirmation key input signal.

In the meantime, the playing of the indicated multimedia item can be performed, in the case in which an input signal corresponding to confirmation from at least one of the execution area 400 and the input means 200 in the state where one of the multimedia item which is being outputted to the output area 300 is indicated. In particular, the mobile terminal of the present invention supports more intuitive and easily operated control of the multimedia item which is being played. This control will be described in more detail with reference to FIG. 2.

FIG. 2 is a drawing illustrating an example of a display means 100 for the playing control of the multimedia item according to an exemplary embodiment of the present invention

Hereinafter, a disk operation unit having a disk shape is illustrated as an operation unit for the playing control of a multimedia item, but the present invention is not limited to this shape. That is, the operation unit can be implemented into various forms, including but not limited in any way to a star shape, a polygon shape, a spherical shape, and a convex or concave lens shape.

Referring now to FIG. 2, the display means 100 of the present invention includes a disk operation unit 500, a button operation unit 550, the execution area 400 and the output area 300. Here, a certain area of the disk operation unit 500, the button operation unit 550, and the execution area 400 generates input signals, respectively, according to user's touch events sent to the controller of mobile terminal. That is, in a certain area of the disk operation unit 500, the button operation unit 550, and the execution area 400 can be operated as an input means. To this end, the portable terminal can control activation of a touch sensor arranged in a certain area of the disk operation unit 500, the button operation unit 550, and the execution area 400. The button operation unit 550 can be deleted from, or can be optionally provided to, the display means 100 depending on the setting of user or the intention of designer, thereafter, can be outputted to the display means 100 according to setting.

Still referring to FIG. 2, the disk operation unit 500 can be generated, when one of the multimedia items which are outputted to the output area 300 in FIG. 1 is activated. For example, in case "Sample1" is activated, the controller of the portable terminal controls to output the disk operation unit 500 which can control the "Sample1". Such disk operation unit 500 can include a wheel area 510, a first information display area 520, a second information display area 530, and a reference mark area 540. The wheel area 510 comprises an area which generates a wheel input signal in response to drag which is generated according to user's touchdown and movement. Accordingly, when the portable terminal user drags according to image of the wheel area 510 after the touchdown of a specific point of the wheel area 510, a wheel input signal can be generated in the direction of the dragging. That is, the wheel area 510 performs the function of the input means, which generates a wheel input signal according to a touch event.

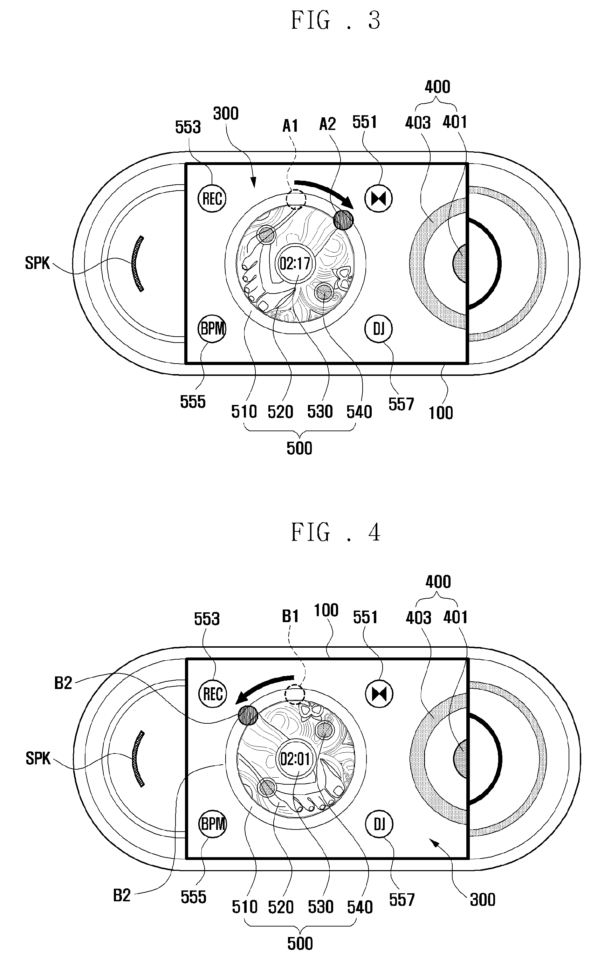

In the meantime, the controller of the portable terminal preferably collects information about the speed of the dragging action as well as the direction of touch event, i.e. the direction of dragging. That is, the controller can detect the direction and the speed of dragging action that is generated in the wheel area 510, and can apply this information to control the playing of the multimedia item. An example of such control being used is illustrated in detail with reference to FIG. 3 and FIG. 4.

As shown in FIG. 3 the first information display area 520 is an area which displays specific information about the multimedia item which is being activated. That is, when the multimedia item comprises music contents, and the music contents includes image information such as album cover, the first information display area 520 can output the image information under the control of the controller. In case the music contents includes text information such as the genre of contents, the characteristics of song, or the name of singer, the first information display area 520 can output the above described text information under the control of the controller.

Here, the information outputted to the first information display area 520 may comprise, for example, an album image associated with the multimedia item, but the image may comprise a default image provided by the portable terminal or set by the user. To support this image association, the portable terminal preferably provides a menu option for selecting an image to be output to the first information display area 520, while the user can control output of the image stored in the storage unit or the image received from the outside to the first information display area 520 by using a corresponding menu option.

At this time, in a case in which the image comprises a video image, a corresponding video image can be outputted to the first information display area 520. In case there is no separate setting, the portable terminal can control output of the default setting image. The information displayed in the first information display area 520 can be outputt while rotating according to the speed of playing. As one possible example. The second information display area 530 comprises an area which outputs information relating with the playing of multimedia item. That is, for instance, in case the multimedia item comprises music contents, the second information display area 530 may output play information like a play time of the music contents, as shown in FIG. 3.

The second information display area 530 preferably output information such as of the entire playing time of the multimedia item as an initial value in the state where the multimedia item is selected. For instance, if a multimedia item having a playing time of 4 minutes 30 seconds exists, the second information display area 530 can output the initial playing time of 4 minutes 30 seconds. And, in case the multimedia item is automatically played or is played according to user's request, the second information display area 530 can output time information corresponding to the current playing section of the multimedia item. Of course, the display area 530 can count up or count down as desired.

With continued reference to FIGs. 3 and 4, the reference mark area 540 comprises an area providing a reference of the wheel area 510 which rotates during when the wheel area 510 is operated according to the touch event generated in the wheel area 510. That is, the reference mark area 540 provides a reference point, which can intuitively indicates the amount of rotation, in a case where the portable terminal user performs drag on the wheel area 510 to rotate in a certain direction.

In the present invention, the reference mark area 540 is illustrated as being output to the first information display area 520, but can be outputt to at least any of the information display areas, such as the first information display area 520 and the second information display area 530. It is preferable that the reference mark area 540 is overlaid on the first information display area 520 while having a certain transparency, so that the reference mark area 540 may provide the readability of information which is being output to the first information display area 520 while the reference mark area 540 is being output to the first information display area 520.

Such a reference mark area 540 can be output while rotating according to the playing speed of the multimedia item like the first information display area 520. Of course, the rotation, or for example, flashing is preferably a ratio of the playing speed of the multimedia item. The button operating unit 550 can include a plurality of buttons, e.g. a first button 551, a second button 553, a third button 555, and a fourth button 557. The button operating unit 550 can output more or fewer buttons to the output area 300 according to the support of portable terminal. Each button included in the button operating unit 550 is buttons which can provide a specific function in association with the playing control of the multimedia item which is being played. For instance, the first button 551 comprises a button which can command the termination of playing of the multimedia item which is being played.

In case the portable terminal user touches the first button 551, the portable terminal controller controls termination of the playing of the multimedia item which is being played, and to output a previously shown screen, e.g., the multimedia item list screen shown in FIG. 1, or to output a predefined screen.

The second button 553 is a recording button which generates an input signal that commands the recording of sound or video. The portable terminal user can store worked information, after performing a specific work based on the multimedia item which is being played by using the second button 553. The third button 555 is a bits per minute button that can control the number of bits per minute of the multimedia item which is being played that would be typically a default value. That is, in the case where the portable terminal user controls the wheel area 510 in the state where the second button 553 is activated, the number of bits per minute corresponding to the controlled wheel area 510 is applied.

Accordingly, the portable terminal user can control the beat i.e. the speed of a specific sound source included in the multimedia item to be faster or slower by using the third button 555. The fourth button 557 is a button for supporting a Disk Jockey (DJ) function with respect to the multimedia item selected in FIG. 1. In case of activating the fourth button 557, the portable terminal user can control the multimedia item by using the DJ function.

In the meantime, in the above description, it is illustrated that the first button 551 to the fourth button 557 perform the termination of playing, the recording, BPM (Bit Per Minute), and the DJ function. However, the above buttons can also be defined as a button for generating an input signal corresponding to other functions, e.g., a sound source adding function and a sound source removal function according to the intention of user. The output area 300 comprises an area that excludes the disk operation unit 500, the button operation unit, and the execution unit, which can provide a background with a specific color according to the user's intention for implementing the interface.

More particularly, in order to increase the readability of the disk operation unit 500, the button operating unit 550, and the execution area 400, the output area 300 may comprise a color contrasting with a color assigned to each of the disk operation unit 500, the button operating unit 550, and the execution area 400, or can have a color which makes the above configurations distinguishable from each other.

In addition, the output area 300 can output other information, e.g. text information or image information related with the multimedia item which is being activated. Moreover, in order that the touch wheel 403 of the execution area 400 be operated similar to a key map, the output area 300 indicates a partial area among the touch wheel 403, and can output information of an executable function with a text or an image in case the indicated partial area that is touched.

Referring again to FIG. 2, the output area 300 can respectively output an indicating bar which indicates text information expressing "menu 1" in the upper portion of the touch wheel 403 area and the touch wheel 403 area for executing "menu 1", and an indicating bar which shows text information expressing "menu 2" in the center portion of the touch wheel 403 area and the touch wheel 403 area for executing "menu 2".

The text information or the image information outputted to the output area 300 can be changed according to the kind of the multimedia item which is being activated. That is, when the multimedia item comprises music contents, the text information and the image information can correspond to a menu relating to music contents, e.g., music removal function, and music contents list output function or the like. In addition, when the multimedia item comprises a photograph, the text information and the image information can be information corresponding to a menu relating to photograph, e.g., photograph removal function.

The execution area 400 includes the touch wheel 403 which is being activated and the confirmation key map area 401, and the touch wheel 403 can be divided into part areas for performing a specific function as described above. The controller of the portable terminal controls the touch wheel 403 area that is not utilized for outputting separate text information or image information, and controls output of the text information or the image information as illustrated in the output area 300, when sensing user's touch. The controller of the portable terminal controls deletion of the text information or the image information from the output area 300, in a case wherein the touch event is completed.

As described above, the portable terminal according to an exemplary embodiment of the present invention can more intuitively and conveniently permit playing control of a corresponding multimedia item by using the disk operation unit 500 and the button operation unit 550, when the multimedia item is selected. Next, the playing control of a multimedia item by using the disk operation unit 500 is illustrated based on screen interface.

FIG. 3 comprises a screen interface illustrating a first embodiment of the playing control of a multimedia item of a portable terminal according to an exemplary embodiment of the present invention.

Referring now to FIG. 2 and FIG. 3, the display means 100 includes the disk operation unit 500, the button operating unit 550, the output area 300, and the execution area 400. The disk operation unit 500 displays the rotation state in a certain direction, e.g., in the right direction, under the control of the controller.

In more detail, based on a specific point of the disk operation unit 500, e.g., the front of the portable terminal, the portable terminal user can drag with a certain angle in the right (clockwise) direction, after touching a first upper center portion A1 of the wheel area 510 having a ring band shape. Accordingly, the disk operation unit 500 rotates with a certain angle in the clockwise direction based on the front of the portable terminal, so that the touch point of the first upper center portion A1 moves to a first certain angle point A2 shown in FIG. 3.

At this time, the reference mark area 540 can be displayed while rotating with the certain angle in the right direction. For instance, in FIG. 2, the reference mark area 540 which is horizontally arranged based on the front of portable terminal can be outputted while rotating with a certain angle in the right direction generated in the wheel area 510.

In the meantime, the text information or image information outputted to the first information display area 520 can maintain the identical state regardless of drag generated in the wheel area 510. Further, the text information or image information displayed to the first information display area 520 can be displayed while rotating with the certain angle in the right direction. For instance, in FIG. 2, the outputting image can be outputted while rotating with a certain angle in the right direction according to drag generated in the wheel area 510.

Similarly, play information which is being outputted to the second information display area 530 can be outputted while rotating with a certain angle in the right direction according to drag generated in the wheel area 510, or can maintain the previous state without rotating, as shown in drawing. Actually, if drag of the right direction is generated in the wheel area 510, it is preferable that the first information display area 520 and the reference mark area 540 clearly indicate that a drag input signal is being applied by being rotated according to the drag in the right direction. And, it is preferable that the play information output to the second information display area 530 maintain the state shown in FIG. 2 for the accurate information transmission regardless of the rotation. In the meantime, the second information display area 530 can display the play information which is changed according to the rotation direction.

For instance, in the case of a drag signal rotating with a certain angle in the right direction is generated, it is assumed that the operation of the multimedia item which is being accessed is set to be performed while playing in a forward direction, i.e. fast forward or playing with fast forward. Accordingly, in case a drag signal of the right direction is generated, the portable terminal controller can display the play time of 2 minutes 17 seconds which is fast forwarded according to the amount of rotation from the play time of 2 minutes 10 seconds, in FIG 2.

In the meantime, in the case in which the user maintains a touch state (i.e. pressed down state) after dragging, the portable terminal controller can output play information according to a pause function to the second information display area 530 with respect to the playing of multimedia item. In case the touch state is cancelled, the second information display area 530 can display play information from the play time of 2 minutes 17 seconds which is current changed play information. In case the touch state is cancelled in the wheel area 510 after dragging, the portable terminal controller preferably changes the text information or the image information displayed in the first information display area 520 into the state shown in FIG. 2. At this time, the portable terminal controller can maintain the play information displayed in the second information display area 530.

In the meantime, as to the point of moving, differently with the playing, the portable terminal controller can return all information to the initially touched point in case the touch state is cancelled. In more detail, in case a touched state which is maintained in a second certain angle point (B2) is cancelled, the portable terminal controller can return the first information display area 520 and the reference mark area 540 to the state shown in FIG. 2, furthermore, can return the play information of the second information display area 530 to 2 minutes 10 seconds which is the point of time shown in FIG. 2. At this time, the portable terminal controller can visually display that the first information display area 520 and the reference mark area 540 are moving to a point shown in FIG. 2, by providing an effect that the first information display area 520 and the reference mark area 540 rotate in the opposite direction of a certain angle which is rotated.

In the playing of multimedia item, when a user desires to skip or fast forward a certain part of multimedia item in the state of FIG. 2, the portable terminal, as shown in FIG. 3, generates an input signal of dragging in the right direction, so that the play of a corresponding multimedia item can be used after skipping or fast forwarding a certain part of multimedia item. Thereafter, in case touch state is cancelled so as to support the generation of additional drag signal, the first information display area 520 and the reference mark area 540 can return to a point identical with that of FIG. 2. At this time, user plays the playing between 2 minutes 10 seconds and 2 minutes 17 seconds according to the speed of dragging, and then, the portable terminal controller can output a corresponding audio signal or image information.

In case of music contents, the user can listen faster or slower to the audio signal according to the play of multimedia item of a corresponding section, i.e. multimedia item between 2 minutes 10 seconds and 2 minutes 17 seconds, according to the speed of dragging. And, the portable terminal controller can control the automatic return of the touch state to the point shown in FIG. 2 from the point of time in which touch state is cancelled, and can control the automatic play of the multimedia item with a predefined speed from 2 minutes 10 seconds. The portable terminal controller can control adjustment of the play speed of multimedia item with respect to the drag signal in a right direction.

In more detail, in case drag signal is generated in the right direction, the portable terminal controller can control the play speed of multimedia item to be a certain speed, e.g., 2 speed, 3 speed, or 4 speed or the like, according to the dragging speed. Accordingly, the multimedia item is played corresponding to the speed that is changed according to the speed of dragging. The portable terminal controller can control to support the disk operation unit 500 according to the selection of the button operation unit 550 so that the above-described functions of disk operation unit 500 may be variously performed.

That is, the above-described functions of disk operation unit can be differently applied according to the function selection prepared in the button operation unit 550. For example, the portable terminal controller of the present invention can control the return of all information to the point of time of touch when the touch state is cancelled in the state where a fourth button 557 is activated in the button operation unit 550, and can provide the skip function which plays from a first certain angle point A2 in the state where the fourth button 557 is deactivated.

FIG. 4 is a screen interface for illustrating a second exemplary embodiment of playing a multimedia item of a portable terminal according to the present invention;

Referring now to FIG. 2 and FIG. 4, the display means 100 includes the disk operation unit 500, the button operating unit 550, the output area 300, and the execution area 400. The disk operation unit 500 displays the state of rotating in the left (counter-clockwise) direction, under the control of the controller.

In more detail, based on a specific point of the disk operation unit 500, e.g., the front of the portable terminal, the portable terminal user can drag with a certain angle in the left direction, after touching a second upper center portion B2 of the wheel area 510 having a ring band shape. Accordingly, the disk operation unit 500 rotates with a certain angle in the left direction based on the front of the portable terminal, so that the touch point of the second upper center portion B2 moves to a second certain angle point B2.

At this time, the reference mark area 540 can be displayed while rotating with the certain angle in the left direction. For instance, in FIG. 2, the reference mark area 540 which is horizontally arranged based on the front of portable terminal can be outputted while rotating with a certain angle in the left (counter-clockwise)_direction generated in the wheel area 510.

In the meantime, the text information or image information outputted to the first information display area 520 can maintain the identical state regardless of drag generated in the wheel area 510. Further, the text information or image information displayed to the first information display area 520 can be displayed while rotating with the certain angle in the left direction. For instance, in FIG. 2, the outputting image can be outputted while rotating with a certain angle in the left direction according to drag generated in the wheel area 510.

Similarly, play information which is being outputted to the second information display area 530 can be outputted while rotating with a certain angle in the left direction according to drag generated in the wheel area 510, or can maintain the previous state without rotating, as shown in drawing. Actually, if drag of the left direction is generated in the wheel area 510, the first information display area 520 and the reference mark area 540 can clearly indicate that a drag input signal is being applied by being rotated according to the drag of the left direction.

In the meantime, similar to FIG. 3, the second information display area 530 can display the play information that is changed according to the rotation direction.

For instance, in case a drag signal of rotating with a certain angle in the left direction is generated, it is assumed that the play of the multimedia item which is being played is set to be performed while playing in a backward direction, i.e. reversed or playing in reverse. Accordingly, in case a drag signal of the left direction is generated, the portable terminal controller can display the play time of 2 minutes 01 seconds which is reversed according to the amount of rotation in the play time of 2 minutes 10 seconds, in FIG 2.

Similarly to FIG. 3, in case a user maintains a touch state after dragging, the portable terminal controller can maintain the time of 2 minutes 01 seconds of the second information display area 530 to be a paused state. In case the touchdown is cancelled, the second information display area 530 can display play information from the play time of 2 minutes 01 seconds which is current changed play information. In case the touchdown is cancelled in the wheel area 510 after dragging, the portable terminal controller can maintain the rotation of the text information or the image information displayed in the first information display area 520, or can change into the state shown in FIG. 2. At this time, the portable terminal controller can maintain the play information displayed in the second information display area 530.

In contrast, the portable terminal controller can return all information to the initially touched point in case the touch state is cancelled. In more detail, in case a touch state that is maintained in a second certain angle point (B2) is cancelled, the portable terminal controller can return the first information display area 520 and the reference mark area 540 to the state shown in FIG. 2. Furthermore, the controller can return the play information of the second information display area 530 to 2 minutes 10 seconds, which is the point of time shown in FIG. 2. At this time, the portable terminal controller can visually display that the first information display area 520 and the reference mark area 540 are moving to a point shown in FIG. 2, by providing an effect that the first information display area 520 and the reference mark area 540 rotate in the opposite direction of a certain angle which is rotated.

In the playing of multimedia item, when user desires to listen again to a certain part of multimedia item in the state of FIG. 2, the portable terminal controller, as shown in FIG. 4, generates an input signal of dragging in the left direction, so that a certain part of multimedia item can be played by back-warding to a certain part which is already played. Thereafter, in case a touch state is cancelled so as to support the generation of additional drag signal, the first information display area 520 and the reference mark area 540 can return to a point identical with that of FIG. 2. Further, when the user operates the playing between 2 minutes 10 seconds and 2 minutes 01 seconds according to the speed of dragging, and then, the portable terminal controller can output a corresponding audio signal or image information.

In case of music contents, the user can listen faster or slower, in the opposite direction, to the audio signal according to the play of multimedia item of a corresponding section, i.e. multimedia item between 2 minutes 10 seconds and 2 minutes 01 seconds, according to the speed of dragging. And, the portable terminal controller can control the automatic return of the touch state to the point shown in FIG. 2 from the point of time in which the touch state is cancelled, and can control automatic play of the multimedia item with a predefined speed from 2 minutes 10 seconds.

In the meantime, the portable terminal controller controls adjustment of the backward speed according to the drag signal of left direction in contrast with the speed control of fast forwarding in FIG. 2. Accordingly, the portable terminal user can generate a drag signal having a certain speed in the left direction for the previous speed or the reduction of speed, after adjusting the speed of fast forwarding by the drag signal of the right direction.

In FIG. 2 to FIG. 4, the performing of a specific function according to the left direction drag and the right direction drag was illustrated, but the present invention is not limited to these functions. That is, the portable terminal of the present invention properly uses the left direction drag and the right direction drag to support a scratching function in the DJ function.

To this end, the portable terminal controls the play of the multimedia item according to the left direction drag and the right direction drag. That is, in a case of multimedia item comprising audio contents, the portable terminal controller can provide the scratching function by controlling performance of the play of audio according to a corresponding drag speed when a drag signal of the right direction or the left direction is generated.

In the above-description, it was illustrated that the right direction drag or the left direction drag is performed while the upper center portion of the wheel area 510 is set as an initial touch point, but the present invention is not limited to these illustrations. That is, user can select any specific point of wheel area 510 as an initial touch point, and can use the above described play control function as user rotates the selected point clockwise or counterclockwise.

As described above, the careen interface of portable terminal according to an exemplary embodiment of the present invention can support various play control of multimedia item by preparing the disk operation unit 500 that can control the play control of multimedia item in the display means 100. And, the portable terminal prepares the disk operation unit 500, so that it can variously support the play control of the disk operation unit 500 according to the purpose of using a multimedia item.

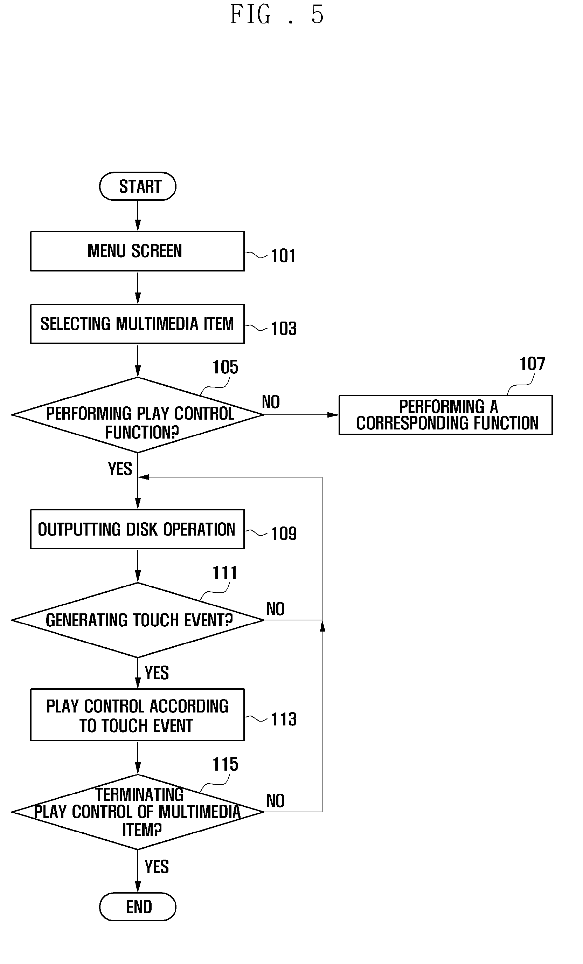

FIG. 5 is a flowchart illustrating a multimedia item playing method of a portable terminal according to an exemplary embodiment of the present invention.

Referring now to FIG. 5, in the multimedia item playing method of the present invention, after booting according to the supply of power is completed, a preset screen, e.g., a menu screen can be output to the display means (101). Then, the portable terminal can select the multimedia item according to the input of user (103).

To this end, the portable terminal supports a highlight function to the output area of the display means to which the multimedia item list is output, and can output the execution area having a direction key function for controlling the highlight to the display means so that the portable terminal can output a multimedia item list which can select a multimedia item, and can select a specific multimedia item list. The user generates an input signal which controls the highlight by using the touch wheel area, and which is included in the execution area in which the touch sensor is activated while the execution area is output as an image type, and can select the multimedia item that the highlight indicates by using the confirmation key map area of the execution area. In the meantime, the portable terminal can support a touch pad that has a wheel pad and a confirmation key. Accordingly, the portable terminal user can perform the same operation by using the touch pad instead of the execution area.

With continued reference to FIG. 5, then, after the multimedia item is selected, the portable terminal confirms whether the performing of play control function is requested (105). In case the performing of the play control function is not requested at step 105, the portable terminal can perform a selected multimedia item based function, e.g., the transmission of multimedia item to the outside, the deletion of multimedia item, and the multimedia item classification (107). Here, the request for performing of play control function can be automatically performed according to the selection of the multimedia item, and in this case, the portable terminal can skip step 107 and directly proceed to step 109 from step 103.

In case the request for performance of the play control function is not automatically performed according to the selection of the multimedia item, the portable terminal can provide an output button for the request for performing of play control function to the display means 100, or can output an item, which can be selected by using a touch pad. The user can request the performance of a function at step 105 by selecting a corresponding button or item. In case the performance of the play control function is requested at step 105, the portable terminal can output the disk operation unit for supporting the play control function (109). At this time, the portable terminal can provide an output for the button operation unit 500 for supporting the disk operation unit.

As described above, the disk operation unit can include a first information display area which displays information about a wheel area of a ring band shape and a selected multimedia item, and a second information display area which displays information about the play of multimedia item, and a reference mark area which provides the reference of rotation according to touch of user. The button operation unit 550 is output to the output area excluding disk operation unit as a button type, and generates an input signal for performing a specific function of multimedia item when the button operation unit 550 is touched.

Then, the portable terminal checks whether a touch event is generated (111). In case the touch event is not generated, the portable terminal can return to step 109 such that the portable terminal can control to maintain the disk operation unit output state. In case the touch event is generated at step 111, the portable terminal can perform the play control according to touch event (113). When touch event is generated, the portable terminal controller can check whether the touch event is valid. That is, the portable terminal can control performing the play control function according to the touch event generated in the disk operation unit.

In the meantime, the play control of portable terminal is illustrated in detail. The portable terminal can support fast forwarding, skipping, and rewinding according to touch down, drag direction, and drag cancel generated in the wheel area of disk operation unit. The portable terminal can provide the function of returning after fast playing or returning after playing with rewinding according to touch down, drag direction, and touch cancel generated in the wheel area of the disk operation unit. Here, the fast forwarding, skipping, rewinding, and returning after playing can be selectively provided according to an activated button, in case a button for a specific purpose, e.g., a button for playing or utilizing a DJ function in the button operation unit 550. Thereafter, the portable terminal checks the termination of play control of multimedia item (115), and, in case an input signal for the termination of play control is not generated, it can return to step 109 and can repeatedly perform the next steps. Then, a configuration of a portable terminal for the play control of multimedia item according to an exemplary embodiment of the present invention is illustrated.

Before a detailed description of portable terminal, the portable terminal of the present invention can include all information telecommunication devices and multimedia devices and all applications thereof such as Portable Multimedia Player (PMP), digital broadcasting player, Personal Digital Assistant (PDA), portable game terminal and Smart Phone or the like, as well as all mobile communication terminals which are operated based on communication protocols corresponding to various communication systems.

Hereinafter, a schematic configuration of the portable terminal of the present invention is illustrated with reference to FIG. 6. FIG. 6 illustrates a representative example that the display means 100 of the present invention is a touch screen, but the display means 100 of the present invention is not limited to a touch screen, but can be configured by OLED or LCD.

Referring now to FIG. 6, the portable terminal of the present invention includes an audio processing unit 1010, an input unit 1020, a display means 100, a storage unit 1030, and a controller 1040. Additionally, the display means 100 includes an output area 300 and an execution area 400, and the input unit 1020 can include an input means 200 of touch pad type. The audio processing unit 1010 can play various audio components (e.g., audio signal according to the play of music file) generated in the portable terminal according to the selection of user. The audio processing unit 1010 converts an audio signal transmitted from the controller 1040 into an analog signal and outputs the converted signal through a speaker (SPK). Accordingly, in case the disk operation unit is used as a configuration for adjusting a speed, the audio processing unit 1010 can output an audio signal according to play which is faster than a normal play speed, or an audio signal according to play which is slower than a normal play speed.

The input unit receives the input of various character information, and sends a signal, which is inputted in relation to the setting of various functions and the play control of the portable terminal, to the controller 1040. The input unit 1020 generates an input signal according to the behavior of user, and can include an input means 200 such as a key pad and a touch pad. In the exemplary embodiment of the present invention, the input unit 1020 can be configured of touch pad to receive the input of input event of user. The input means 200 is a physical medium which processes the input of user through the interaction between user and portable terminal. Particularly, as illustrated in FIG. 1 to FIG. 4, the input means 200 includes a touch pad which receive the input of input event of user. The input means 200 sends the input event to the controller 1040, in case the input means 200 senses the input of input event in the touch pad. The controller 1040 can control indication or selection of a particular multimedia item in response to the input event. In an exemplary embodiment of the present invention, the display means 100 can be divided into an output area 300 and an execution area 400. In addition, in a case in which the display means 100 is configured for a touch screen, the display means 100 can represent an input/output means which simultaneously performs an input function and a display function.

The display means 100 displays screen data which is generated during when performing the function of portable terminal, and displays status information according to the key operation of user and the setting of function. That is, the display means 100 can display various screen data in relation to the state and operation of the portable terminal. The display means 100 visually displays various signals and color information outputted from the controller 1040. In addition, the display means 100 receives the input of touch event of user.

Particularly, in the exemplary embodiment of the present invention, the display means 100 includes the output area 300 and the execution area 400. The output area 300 can output the disk operation unit for the play control of the multimedia item, in case the multimedia item is selected as illustrated in FIG. 1 to FIG. 4. The disk operation unit provides a wheel area and an information display area. Touch event generated in the wheel area is transmitted to the portable terminal controller, so that the transmitted touch event can be used as an input signal which controls the play of multimedia item which is playing. According to an exemplary embodiment of the present invention, the input means 200 and the display means 100 of the input unit 1020 are adjacently arranged, so that the touch area of the input means 200 and the execution area 400 of the display means 100 are closely arranged to be organically connected. The storage unit 1030 can be configured of ROM (Read Only Memory) and RAM (Random Access Memory). The storage unit 1030 can store various data which are generated and utilized in the portable terminal. The data includes data generated according to the execution of allocation of the portable terminal and all kinds of data which are generated by using the portable terminal or are received from the outside (external portable terminal, personal computer or the like) and can be stored. Particularly, the data includes at least one multimedia item, a user interface provided from the portable terminal, various setting information according to the usage of the portable terminal, and function setting information for the function setting between the disk operation unit and the button operation unit 550. The function setting information is information defined to differently apply the function of disk operation unit according to the setting of portable terminal, e.g., the activation of button operation unit 550. For instance, as described above, the function setting information can be information defined to skip a certain section of multimedia item or to play while fast forwarding according to touch event generated in the disk operation unit in case the DJ button of button operation unit 550 is activated. Further, a multimedia item normal play button is included in the button operation unit 550. In case the multimedia item normal play button is activated, the function setting information can be information which defines the play speed control function of multimedia item according to touch event generated in the disk operation unit in the activation of the play button. The function setting information can include information which defines the function of the disk operation unit in the state where the button of the button operation unit 550 is deactivated. Here, it is illustrated that the button operation unit 550 and the disk operation unit are linked in the function definition of the function setting information. However, the portable terminal of the present invention can control performance of other functions according to the same touch event through other setting, e.g., menu selection provided by portable terminal. The controller 1040 performs the overall control function over the portable terminal, and controls a signal flow between the respective blocks within the portable terminal. The controller 1040 controls a signal flow between the respective configurations such as the audio processing unit 1010, the input unit 1020, the display means 100, and the storage unit 1030. Particularly, according to the function setting information stored in the storage unit 1030, in case a specific multimedia item is selected to perform a play control, the controller defines the function of disk operation unit, and analyzes an input signal according to touch event generated in the disk operation unit depending on information defined in the function setting information. Based on this, the controller 1040 generates a control signal for the play of multimedia item. Then, the controller 1040 can perform the control of the play control of multimedia item according to the control signal. The controller 1040 which controls the above described operation can control the overall operation of the present invention as described in the description illustrated with reference to FIG. 1 to FIG. 6. The above described function control of the controller 1040 can be implemented by software and can process the operation of the present invention.

In the meantime, in FIG. 6, for the convenience of illustration, a schematic configuration of the portable terminal was illustrated. However, the portable terminal of the present invention is not limited to such configuration. Accordingly, in case the portable terminal of the present invention supports a mobile communications service, the controller 1040 can includes a baseband module for the mobile communications service of the portable terminal. As described above, in case the portable terminal of the present invention supports a mobile communications service, the portable terminal can includes a wireless communication unit which performs communication such as voice call, video telephony call, and data call by forming a communication channel which is set with a supportable mobile communications network.

In addition, the audio processing unit 1010 can further include a voice signal processing function according to mobile communications service. Further, although not illustrated in FIG. 6, the portable terminal of the present invention can further include elements which are not mentioned in the above such as a camera module which can obtain a corresponding video data through photographing a subject depending on the provision type, a digital broadcast reception module that can receive digital broadcast, a short-range communication module for short-range communication, and an Internet communication module that performs an internet function by communicating with internet network. Such elements cannot be all enumerated as their variants are so numerous according to the trend of the convergence of digital devices, but an element which is almost equivalent to the above elements can be further included in the portable terminal. Moreover, in the portable terminal of the present invention, a specific block can be excluded in the above configuration or can be replaced with another block.

In the exemplary embodiment of the present invention referring to FIG. 1 to FIG. 6, it is illustrated as a representative example that the portable terminal includes a touch screen. However, the portable terminal of the present invention and its operation are not limited to the usage of touch screen. Accordingly, the portable terminal of the present invention can be operated by the combination of a display unit configured of normal LCD and a key pad and/or a touch pad. Moreover, the terms "left direction" and "right direction" area matter of convention, and a person of ordinary skill in the art understands and appreciates that such movement in opposite directions, rotations should be understood to fall within the meaning of the appended claims.

Although exemplary embodiments of the present invention have been described in detail hereinabove, it should be clearly understood that there are many variations and modifications of the basic inventive concepts herein taught which may appear to those of ordinary skill in the art that will fall within the spirit and scope of the present invention, as defined in the appended claims.

## Claims

1. An apparatus for playing a multimedia item, the apparatus comprising:
a display means (100) which displays an operation unit (500) that includes a wheel area (510) and generates an input signal upon sensing a touch event generated in the wheel area (510) in selecting or generating the multimedia item;
a storage unit (1030) which stores function setting information defining a function according to at least one multimedia item and the input signal generated in the operation unit; and
a controller (1040) which generates a control signal for playing the multimedia item based on the input signal generated in the operation unit and the function setting information.

2. The apparatus of claim 1, wherein the display means comprises
an output area (300) which outputs a list including the multimedia items, and information according to a play of the multimedia item; and
an execution area (400) which includes a touch wheel area (403) that generates an input signal for indicating a multimedia item which is output to the output area and a confirmation key map area that generates an input signal for selecting the indicated multimedia item.

3. The apparatus of claim 2, wherein the operation unit (500) is displayed in the output area (300), in selecting or generating the multimedia item.

4. The apparatus of claim 1, wherein the operation unit further comprises:
a first information display area (520) which is arranged inside of the wheel area (510), and includes at least one of image information and text information of played multimedia item; and
a second information display area (530) which is arranged inside of the first information display area (520) , and outputs play information of the multimedia item.

5. The apparatus of claim 4, wherein the second information display area (530) maintains a display state independently of a drag signal generated in the wheel area (510).

6. The apparatus of claim 4, wherein the first information display area outputs a rotation state according to a drag signal of a certain direction generated in the wheel area (510) or a rotation state according to a speed of playing the multimedia item.

7. The apparatus of claim 1, wherein the function setting information includes information which is defined to be able to perform a different function with respect to an identical touch event generated in the operation unit (500) according to a setting of the portable terminal.

8. The apparatus of claim 1, wherein the controller (1040) outputs a control signal which controls a play of the multimedia item according to a drag signal which is generated when a touchdown (pressed down) that is generated in the wheel area is moved in a certain direction in a state where the touchdown is maintained.

9. The apparatus of claim 8, wherein the controller returns to an operation unit state according to the play of multimedia item previous to generation a drag signal, or controls the play of multimedia item from a point of time of cancelling the touchdown, when cancelling the touchdown.

10. A method for playing a multimedia item, the method comprising:
selecting the multimedia item for playing;
outputting an operation unit (500) that includes a wheel area (510), and generates an input signal according to a touch event generated in the wheel area (510);
loading a function setting information defining a function according to at least one multimedia item and the input signal generated in the operation unit; and
generating a control signal for playing the multimedia item based on the input signal generated in the operation unit and the function setting information.

11. The method of claim 10, wherein outputting an operation unit further comprises at least one of:
a first information display step of displaying information including at least one of image information and text information of the multimedia item to a first information display area (520) which is prepared inside of the wheel area; and
a second information display step of displaying play information of the multimedia item to a second information display area (530) which is prepared inside of the first information display area (520).

12. The method of claim 11, wherein the first information display step comprises at least one of:
outputting a rotation state according to a drag signal of a certain direction generated in the wheel area (510); and
outputting a rotation state according to a speed of playing the multimedia item.

13. The method of claim 10, wherein generating a control signal comprises at least one of:
generating a control signal which is defined to be able to perform a different function with respect to an identical touch event generated in the operation unit (500) according to a setting of the portable terminal;
generating a drag signal according to a movement and outputting a control signal which controls a play of the multimedia item according to the drag signal, in case a touchdown which is generated in the wheel area (510) moves in a certain direction in a state where the touchdown is maintained; and
outputting a control signal for a scratch function, in case a drag signal in a right direction and a drag signal in a left direction are alternatively generated.

14. The method of claim 13, wherein generating a control signal further comprises:
cancelling the touchdown; and
returning to an operation unit state according to the play of multimedia item previous to generation a drag signal.

15. The method of claim 13, wherein generating a control signal further comprises:
cancelling the touchdown; and
controlling the play of multimedia item from a point of time of cancelling the touchdown.
